# EUROPÄISCHE PATENTANMELDUNG

(11) **EP 2 811 270 A1**
(43) Veröffentlichungstag der Anmeldung: **10.12.2014**
(21) Anmeldenummer: 14400020.5
(22) Anmeldetag: 04.03.2014
(51) Int. Cl.: G01G 19/44, G01G 19/52, A61G 7/05

(54) **Waage mit temperierbarer Objektauflage**

(30) Priorität: 03.06.2013 DE 102013009438
(71) Anmelder: seca ag, 4153 Reinach BL 1 (CH)
(72) Erfinder: Vogel, Frederik, 22301 Hamburg (DE)
(74) Vertreter: Patentanwälte Klickow & Partner Partnerschaftsgesellschaft mbB

(57) **Zusammenfassung**

Die Vorrichtung dient zum Messen mindestens eines Parameters eines Objektes, wobei die Vorrichtung eine Objektaufnahme aufweist. Die Objektaufnahme ist mit einem Temperierelement zum Temperieren des Objektes versehen.

Die Erfindung betrifft insbesondere eine Waage zum Bestimmen eines Gewichtes eines Wägeguts, wobei die Waage eine Wägegutaufnahme aufweist, wobei die Wägegutsaufnahme ein Temperatierelement zum Temperieren des Wärmeguts aufweist. Somit können Waagen bereitgestellt werden, mit denen insbesondere das Gewicht bestimmt werden kann.

## Beschreibung

Die Erfindung betrifft eine Vorrichtung zum Messen mindestens eines Parameters eines Objektes, wobei die Vorrichtung eine Objektaufnahme aufweist. Die Erfindung betrifft insbesondere eine Waage zum Bestimmen eines Gewichts eines Wägeguts, wobei die Waage eine Wägegutaufnahme aufweist.

Früh- und Neugeborene haben meist noch keine ausreichende Fettschicht zur Wärmeisolierung aufgebaut. Das bedeutet, dass sobald sie die wärmende Umgebung des Brutkastens oder der Kleidung verlassen, sie sehr schnell auskühlen. Dies kann sowohl zur Unterkühlung als auch häufig zu Unwohlsein führen. Als Reaktion auf das Unwohlsein reagiert das Früh- und Neugeborene häufig mit schreien, welches sowohl das Pflegepersonal als auch die Eltern in Stress versetzen kann.

Insbesondere bei Frühgeborenen ist es wichtig, regelmäßig das Gewicht zu kontrollieren, und den Gesundheitsverlauf zu dokumentieren. Dazu werden die Frühgeborenen häufig in einem Brutkasten aufbewahrt, welcher eine Umgebungstemperatur entsprechend der Körpertemperatur ausbildet.

Da beim medizinischen Wiegen sämtliche Kleidung entfernt wird und das Frühgeborene den Brutkasten verlassen muss, werden Heizstrahler oberhalb von Waagen angeordnet. Da die Wiegenmulde auf Grund der leichten Desinfizierbarkeit häufig aus Metall besteht, kann dies zu Folge haben, dass die Wiegemulde noch nicht ausreichend durch den entfernt angeordneten Heizstrahler aufgewärmt wurde.

Zudem bedarf es einer relativ langen Zeit, bis über die Wärmestrahlung die Waage an die entsprechende Körpertemperatur des Säuglings angepasst ist. Auch Übertemperierungen sind möglich.

Aufgabe der vorliegenden Erfindung ist es, eine Vorrichtung der einleitend genannten Art derart zu konstruieren, dass eine Temperaturempfindlichkeit des Messobjektes berücksichtigt werden kann.

Aufgabe der Erfindung ist es insbesondere auch, den Stand der Technik zu verbessern und dabei eine einfache Ausbildung für den Einsatz als Babywaage zu schaffen.

Die erste Aufgabe wird erfindungsgemäß dadurch gelöst, dass die Objektaufnahme ein Temperierelement zum Temperieren des Objektes aufweist.

Gelöst wird die weitere Aufgabe durch eine Waage zum Bestimmen eines Gewichtes eines Wägeguts, wobei die Waage eine Wägegutaufnahme aufweist, wobei die Wägegutaufnahme ein Temperierelement zum Temperieren des Wägeguts aufweist.

Somit kann direkt ein Temperieren des Wägeguts erfolgen. Das Verwenden eines externen Wärmestrahlers kann somit unterbleiben. Zudem kann eine zügigere Erwärmung erfolgen. Weiterhin geht weniger Wärme verloren und somit ist weniger Energie notwendig, da die Wärme direkt an dem Ort erzeugt wird, an dem diese gebraucht wird. Weiterhin kann die Waage sehr schnell die gewünschte Zieltemperatur erreichen.

Der Begriff "Waage" umfasst im folgenden Messgeräte zum Bestimmen einer Masse oder eines Gewichts, wobei das Messen direkt oder indirekt erfolgen kann. Bei den direkten Waagen wird das Gewicht in eine andere Größe transformiert. Beispiele hierfür sind eine Federwaage oder Waagen, welche auf Messprinzipien der Verformungsmessung beruhen, wie beispielsweise bei Kraftsensoren.

Bei den direkten Waagen erfolgt ein Vergleich mit einer bekannten Masse. Das bekannteste Beispiel für eine solche Waage ist eine Balkenwaage. Aber auch Laufgewichtswaagen sind von diesem Waagentyp umfasst.

Als "Wägegutaufnahmen" dienen sämtliche festen und flexiblen Aufnahmen für das zu wiegende Gut. Insbesondere sind Wägemulden umfasst.

Das "Wägegut" oder das zu vermessende Objekt, ist insbesondere ein Säugling, es kann sich aber auch um sonstige Güter handeln, die eine gewünschte (Ziel)-Temperatur aufweisen sollen, die oberhalb der Umgebungstemperatur liegt.

Das "Temperierelement" ist im Allgemeinen eine technische Vorrichtung, welche die Wägegutaufnahme mit einer Ziel-Temperatur versieht. Die Temperier-elemente werden insbesondere elektronisch betrieben.

Damit die durch das Temperierelement erzeugte Wärme möglichst homogen auf der Wägegutaufnahme verteilt wird oder möglichst schnell zur Verfügung steht, weist die Wägegutaufnahme leitendes Material auf. Das wärmeleitende Material umfasst dabei insbesondere Metalle, Wärmeleiter, wärmeleitende Kunststoffe und Halbleiter. Auch eine Mischung dieser Materialien ist umfasst.

In einer Ausführungsform umfasst das Temperierelement einen Heizdraht und/oder einen Infrarotsender. Somit können verschiedene Alternativen zum Beheizen der Wägegutaufnahme bereitgestellt werden.

Bei der Verwendung von Heizdrähten kann durch die Anzahl der Heizdrähte die Wärmegutaufnahme homogen mit einer vorgegebenen Temperatur versorgt werden.

Ein Vorteil beim Verwenden von Infrarotemittern liegt darin, dass eine angenehme Wärme (Strahlungswärme) zur Verfügung gestellt wird. Insbesondere sind Infrarotemitter elektronisch leicht ansteuerbar und bei einem Fehler erfolgt kein Überhitzen, sondern lediglich eine verminderte Heizleistung, sodass Verbrennungen am Säugling ausgeschlossen werden können.

Um die aktuelle Temperatur der Wägegutaufnahme zu bestimmen und gegebenenfalls anzuzeigen, kann die Wägegutaufnahme oder das Temperierelement eine direkte Temperaturmesseinrichtung und/oder eine indirekte Temperaturmesseinrichtung aufweisen.

Eine direkte Temperaturmesseinrichtung ist beispielsweise ein Thermometer oder ein Temperatursensor. Bei der indirekten Temperaturmesseinrichtung kann beispielsweise der aktuelle Stromfluss der Heizdrähte gemessen werden. Dieser Stromfluss kann mit einer Temperatur der Wägegutaufnahme korrelieren.

Auch kann umgekehrt die Temperatur eines Wägeguts bestimmt werden, da sich durch die Temperatur des Wägeguts beispielsweise der Widerstand des Wärmedrahts ändert, welcher dann bestimmbar ist.

Durch die Verwendung des Temperatursensors und durch die gezielte Erwärmung wird insbesondere ein Schutz vor einer Unterkühlung bereit gestellt.

In einer weiteren Ausführungsform weist das Temperierelement eine Steuerung und/oder eine Regelung auf. Somit kann entweder die Zieltemperatur möglichst schnell erreicht werden oder auch gewährleistet werden, dass die Zieltemperatur nicht überschritten wird. So kann beispielsweise eine Zweipunktregelung für das Warmhalten eines Lebensmittels ausreichend sein, während beim Temperieren für Säuglinge auch kleinste Temperatur-überschreitungen ausgeschlossen werden müssen.

In einer zusätzlichen Ausführungsform ist die Wägegutaufnahme flächig stabil oder flexibel ausgestattet. Bei dem flächig stabilen Wägegutaufnahmen passt sich das Wägegut der Wägegutaufnahme im Wesentlichen an und eine Form der Wägegutaufnahme verändert sich nicht. Bei den flexiblen Wägegutaufnahmen sind insbesondere Hebammenwaagen umfasst, bei denen die Säuglinge hängend gewogen werden. Hier passt sich die Wägegutaufnahme der Körperform an. Eine einfache Realisierung ist eine Stoffähnliche Wägegutaufnahme mit eingelassenen Heizdrähten.

Um zu gewährleisten, dass insbesondere ein Säugling nicht von der Waage herunterfällt, kann die Wägegutaufnahme muldenförmig ausgestaltet sein.

In einer weiteren Ausführungsform weist die Waage eine Temperatureinstelleinrichtung auf, über die eine Temperatur für die Wägegutaufnahme vorgegeben werden kann.

Um den Nutzer der Waage möglichst viele Informationen zur Verfügung zu stellen, kann die Waage ein Display aufweisen, welches das Gewicht und/oder eine oder mehrere Temperaturen anzeigt. Zu den mehreren Temperaturen kann sowohl die Soll- als auch die Ist-Temperatur umfassen. Auch eine ggf. ermittelte Temperatur des Wägeguts kann angezeigt werden.

Im Weiteren wird die Erfindung anhand von Ausführungsbeispielen näher erläutert.

In den Zeichnungen sind Ausführungsbeispiele der Erfindung schematisch dargestellt. Es zeigen:

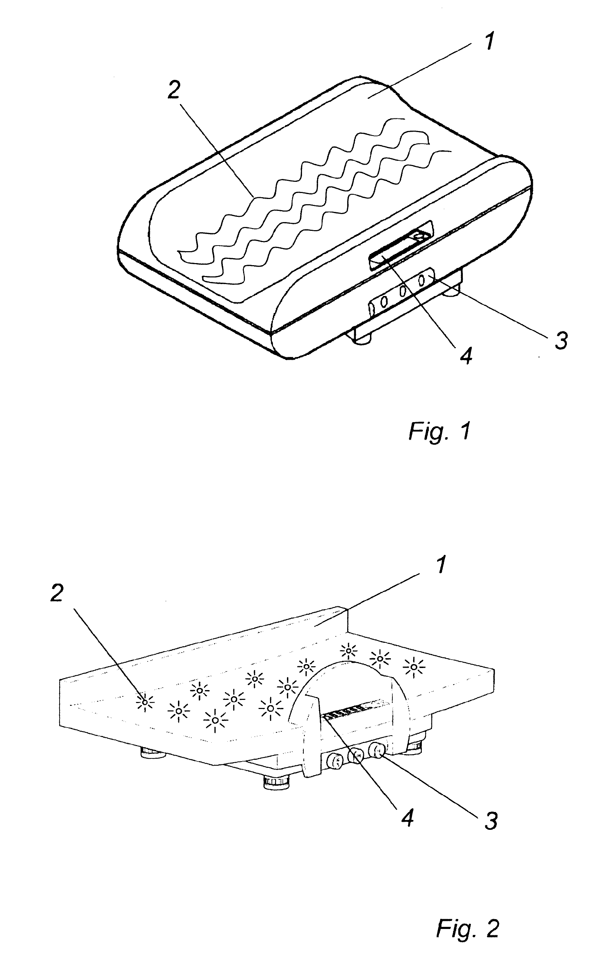

- Figur 1: eine schematische Darstellung einer Säuglingswaage mit in einer Wiegemulde eingelassenen Wärmedrähten,
- Figur 2: eine schematische Darstellung einer Babywaage mit in einer Wiegemulde eingelassenen Infrarotdiode und

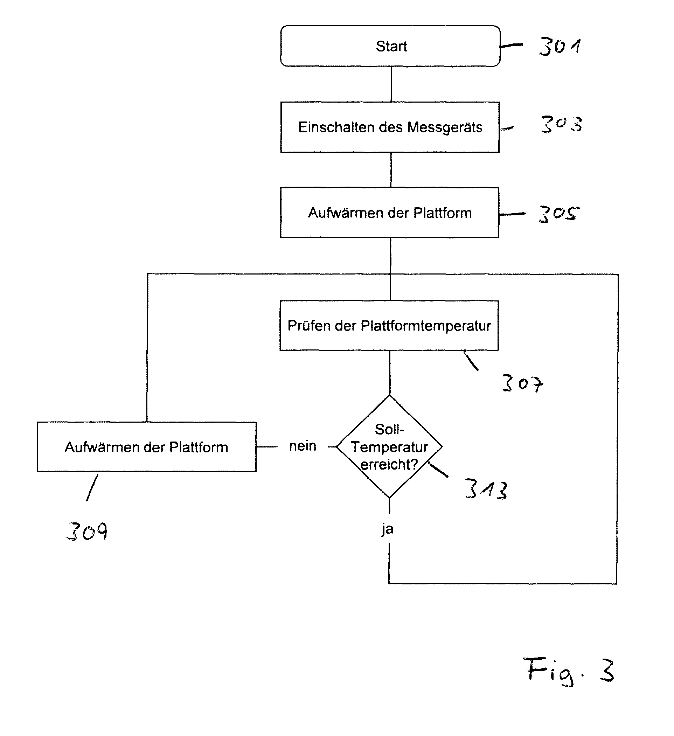

- Figur 3: eine schematische Darstellung des Ablaufs eines Aufheizvorgangs.

Eine Säuglingswaage weist sowohl einen Schalter (3) zum Regulieren der Temperatur, als auch eine Anzeige (4) zum Anzeigen des Gewichts und ggf. der Temperatur auf. Jede hier dargestellte Waage weist eine Wiegemulde (1) auf. Die Wiegemulde (1) verhindert, dass das Wägegut, vorliegend insbesondere ein Baby, von der Waage herunterkullert und sich ggf. Verletzungen zuführt.

In einer ersten dargestellten Alternative sind in die Wiegemulde (1) Heizdrähte (2) eingelassen. Die Wiegenmulde (1) besteht aus Metall, so dass diese gut gereinigt werden kann. Die metallischen Heizdrähte (2) sind von einem elektrischen Isolator, welcher zugleich akzeptable Wärmeleitfähigkeiten aufweist, ummantelt. Somit wird die Wärme homogen über die Heizdrähte (2) an die metallische Wiegemulde (1) übergeben. Somit wird eine homogene Wärmeverteilung auf der Wiegemulde (1) gewährleistet.

In einer diesbezüglichen Alternative besteht die Wiegemulde (1) aus einem wärmeleitenden Kunststoff, wobei die Heizdrähte (2) direkt unterhalb der Oberfläche angeordnet sind. Zum Überwachen der aktuellen Temperatur ist direkt unterhalb der Oberfläche der Wiegemulde (1) ein Wärmesensor angeordnet, dessen gemessener Wert am Display (4) ausgegeben wird.

In einer zweiten dargestellten Alternative weist die Wiegemulde regelmäßig verteilte Infrarotdioden auf. Diese Infrarotdioden senden eine Wärmestrahlung aus. Auch in diesem Fall ist die Wiegemulde teilweise metallisch, wobei durch die Strahlungsgeometrie der Infrarotdioden gewährleistet ist, dass nicht nur das Wägegut direkt mit Wärmestrahlung beaufschlagt wird, sondern auch die Wiegemulde selbst aufgeheizt wird.

Wird nun die Waage gestartet 301, erfolgt zugleich das Messen des Temperatursensors. Für den Fall, dass die Solltemperatur 313 erreicht ist, erfolgt kein weiteres Erwärmen. Dann wird angezeigt, dass die Plattform die gewünschte Wärme erreicht hat (nicht dargestellt), sodass nun ein Wiegen des Säuglings erfolgen kann.

## Patentansprüche

1. Vorrichtung zum Messen mindestens eines Parameters eines Objektes, wobei die Vorrichtung eine Objektaufnahme (1) aufweist, **dadurch gekennzeichnet, dass** die Objektaufnahme (1) ein Temperierelement zum Temperieren des Objektes aufweist.

2. Vorrichtung nach Anspruch 1, **dadurch gekennzeichnet, dass** die Objektaufnahme (1) wärmeleitendes Material aufweist.

3. Vorrichtung nach einem der vorherigen Ansprüche, **dadurch gekennzeichnet, dass** das Temperierelement einen Heizdraht und/oder einen Infrarotsender umfasst.

4. Vorrichtung nach einem der vorherigen Ansprüch, **dadurch gekennzeichnet, dass** die Objektaufnahme (1) und/oder das Temperierelement eine direkte Temperaturmesseinrichtung und/oder eine indirekte Temperaturmesseinrichtung aufweisen.

5. Vorrichtung nach einem der vorherigen Ansprüche, **dadurch gekennzeichnet, dass** das Temperierelement eine Steuerung und/oder eine Regelung aufweist.

6. Vorrichtung nach einem der vorherigen Ansprüche, **dadurch gekennzeichnet, dass** die Objektaufnahme (1) flächig stabil oder flexibel ausgestaltet ist.

7. Vorrichtung nach einem der vorherigen Ansprüche, **dadurch gekennzeichnet, dass** die Objektaufnahme (1) muldenförmig ausgestaltet ist.

8. Vorrichtung nach einem der vorherigen Ansprüche, **gekennzeichnet durch** eine Temperatureinstelleinrichtung.

9. Vorrichtung nach mindestens einem der Ansprüche 1 bis 8, **dadurch gekennzeichnet, dass** die Vorrichtung als Waage zum Bestimmen eines Gewichts eines Wägegutes ausgebildet ist.

10. Vorrichtung nach einem der vorherigen Ansprüche, **gekennzeichnet durch** ein Display, welches das Gewicht und/oder eine oder mehrere Temperaturen anzeigt.
